# EUROPEAN PATENT APPLICATION

(11) **EP 2 425 710 A2**
(43) Date of publication of application: **07.03.2012**
(21) Application number: 11158750.7
(22) Date of filing: 18.03.2011
(51) Int. Cl.: A01K 5/01

(54) **Apparatus for feeding of pets**

(30) Priority: 07.09.2010 IN DE21302010
(71) Applicant: Jain, Neeraj, Delhi 110 052 (IN)
(72) Inventor: Jain, Neeraj, Delhi 110 052 (IN)
(74) Representative: Grünecker, Kinkeldey, Stockmair & Schwanhäusser

(57) **Abstract**

The present invention provides for a pet feeding apparatus (1) comprising of removable pet feeding containers (11) placed on a holding device (21). Removal of the feeding containers allows them to be easily cleaned and disinfected in either convenient means such as a dishwasher or such other means available for the same purpose. The feeding containers and the holding device are coated elastomerically to avoid movement or displacement of the feeding containers or the apparatus itself thereby preventing spillage of food, water or such other liquids thereof. Due to resistance to movement, unwanted noise otherwise generated between the feeding containers and the holding device is prevented.

## Description

**Technical field:** The present invention relates to apparatus for feeding of pets. In particularly, the invention provides for an apparatus comprising removable feeding containers.

**Background and prior art:** Animal feeding apparatus are well known in the art. Particularly, feeding apparatus having separate compartments are widely used. Compartmentalized feeding dishes provide for a single unit for holding food and water independently, so as to conveniently provide complete nourishment for the pet. Several innovations in this particular field have helped overcome a number of shortcomings in this field. One such innovation documented in 1591/DEL/2006, which, is a co-pending application by the same inventor, a thermal and dent resistant bowl is disclosed. The invention aims to solve the problems of scratches and douches caused on the pet food container by the animals during feeding where such scratched and dented surface is susceptible to microbial growth. Stainless steel is the material of choice for making such apparatus for storing and serving pet food. Not only is it resistant to scratches and gouges caused by the pets is themselves but it also resistant to the harmful fungi and bacteria which breed in the dents caused by these scratches and gouges. The invention claims an improved two layered thermal and dent resistant bowl comprising inner metallic layer and outer thermal resistant layer made from plastic or other similar materials which are compressed and fixed together by interlocking top edges of inner metallic layer and outer thermal resistant layer.

The bowls containing the food are pushed or moved around by the pet during the act of feeding. This causes spillage of food or liquid contained in the bowls. Such movement of the container on the floor also leads to generation of unwanted noise. Another co-pending application by the same inventor, 1869/DEL/2008, attempts to solve this problem by providing for an anti-slip provision at the bottom of the container as interference fit attachment to the container. In this manner, the movement of the container is prevented when the pet is drinking or eating from the container bowl. These containers typically contain at least one inner metallic shell which acts as a receptacle for storing food and an outer plastic shell which provides ease of handling and acts as a stand for inner metallic shell. Plastic has been chosen over other materials for outer shell because of its number of desirable properties such as good manufacturability, low cost, ease of post manufacturing printing, embossing, etc..

As is already known, it is advisable to clean pet feeding containers before next use. Such a practice prevents formation of undesirable microbial growth on the remnants of leftover food or food spilled around the bowls for example on the stand holding such bowls. However, plastic stands or stands made of such other non-metallic materials degrade when subjected to repeated wash cycles in a dishwasher or any other means that uses hot water or detergent. Thus the user cannot effectively clean or disinfect the feeding apparatus before next use.

Prior art US 4,699,089 addresses this problem of cleaning and spillage of food by providing a storage container, a feeding table over the storage container, a splash board surrounding the storage container and feeding table on 3 sides. The feeding table consists of removable dishes. For cleaning, the feeding table is removed by lifting vertically upwards and the splash boards prevent spillage. However, the device cannot be used for all the pets. It is found that for pets which are of very large size can still move the device managing to spill food if not on the floor but on the wooden feeding table soiling the area around the feeding bowls. Furthermore, it is seen that such movement of the device also leads of displacement of the bowls. This displacement causes the food to spill outside the feeding bowls and at times, the feeding bowls are even knocked over.

The present invention endures to solve all these problems by underlining the pet feeding containers using an elastomeric material. This elastomeric material helps the feeding containers to stay in place even if the entire feeding apparatus is displaced by the pet. Such underlined feeding containers further prevent generation of unwanted noise such as rattling, clanging, etc which may be caused due to movement of feeding containers against the stand holding such containers.

Thus, it is the object of the present invention to provide for a pet feeding apparatus which comprises of removable feeding containers thereby permitting complete cleaning of these containers.

A second object of the present invention is to provide for pet feeding containers where the containers can be easily cleaned and disinfected after every use.

A third object of the present invention is to provide for a pet feeding apparatus which cannot be moved by the pet by pushing, nudging or knocking over during the act of feeding.

It is the fourth object of the present invention to provide for feeding containers which do not get displaced even if the pet manages to move the feeding apparatus.

It is the fifth object of the present invention to prevent spillage of food, water or such other liquids on and around the feeding apparatus thereby maintaining clean and hygienic surroundings.

It is the sixth object of the present invention to provide for a pet feeding apparatus which prevents movement of the feeding containers thereby preventing generation of unwanted noise and banter.

It is the seventh object of the present invention to provide for a pet feeding apparatus which is easy to clean thereby providing the pet owner a hassle free experience for rearing the pet.

An eighth object of the present invention is to provide for a method of feeding the pets in clean feeding containers.

**Summary of the invention:** The present invention provides for a pet feeding apparatus comprising of removable pet feeding containers placed on a holding device. Removal of the feeding containers allows them to be easily cleaned and disinfected in either convenient means such as a dishwasher or such other means available for the same purpose. The feeding containers and the holding device are coated elastomerically to avoid movement or displacement of the feeding containers or the apparatus itself thereby preventing spillage of food, water or such other liquids thereof. Due to resistance to movement, unwanted noise otherwise generated between the feeding containers and the holding device is prevented.

### Brief Description of the Drawings: A full understanding of the invention can be gained from

the following description when read in conjunction with the appended drawings. It is to be understood that the drawings are presented for illustrative purpose only and the scope of the appended claims is not limited to the specific embodiments shown in the drawings. In the drawings:
**Fig. I:** Side view of the feeding apparatus.
**Fig II:** Exploded view of a bowl with liner of the feeding apparatus.
**Fig. III:** Magnified view of the area designated as "X" in Fig. I
**Fig. IV:** Top view of the feeding apparatus as shown in Fig. I with the bowls depicted in phantom.

**Detailed Description:** The present invention relates to a pet feeding apparatus **1** for receiving, holding and making food, water and such other liquids available for feeding for pet animals. Referring to drawings a preferred embodiment of the pet feeding apparatus **1** according to the present invention is disclosed. **Figs. I-IV** illustrate a feeding apparatus **1** for a pet and its various components thereof. The apparatus essentially consists of two feeding containers **11** supported on holding device **21** that receives and holds the containers **11**. Both the feeding containers are soft circular and substantially similar in shape. In the present embodiment, both the feeding containers **11** as well as the holding device **21** are made of metallic material. The metal for construction should preferably have desirable properties such as anti-rust, anti-corrosive, non-toxic surface which is smooth, polished and does not get dented or scratched easily. The feeding containers **11** and/or the holding device **21** may optionally be coated with suitable known materials to achieve such desirable properties. In another embodiment, the feeding apparatus **1** may contain either one or more than one containers placed on the same stand wherein the containers may or may not be substantially of the same shape of size. In case of multiple feeding containers, the shape and size may be altered according to aesthetic designs and utility of such feeding containers.

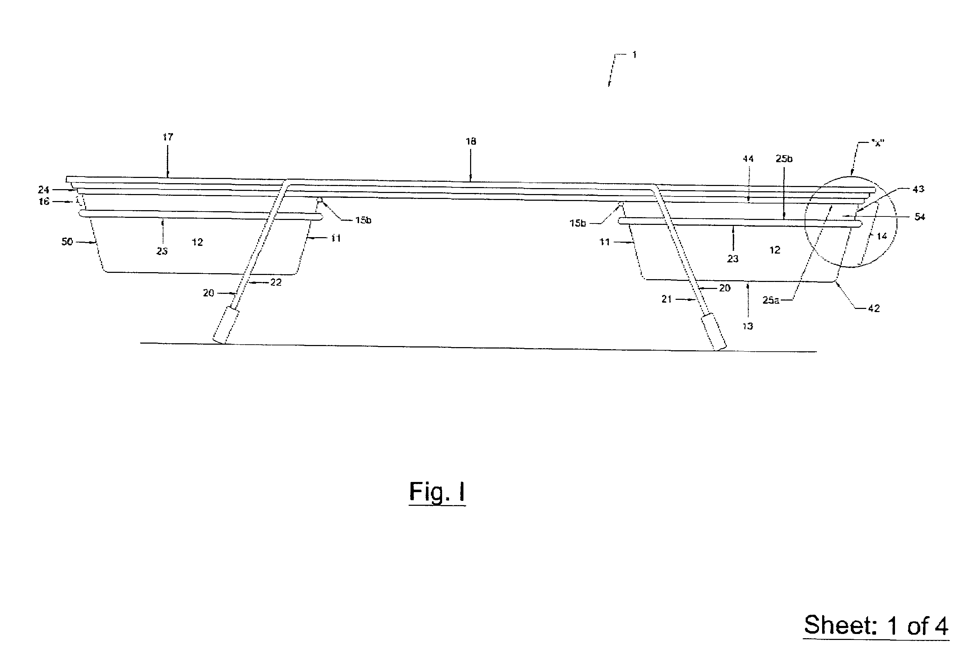

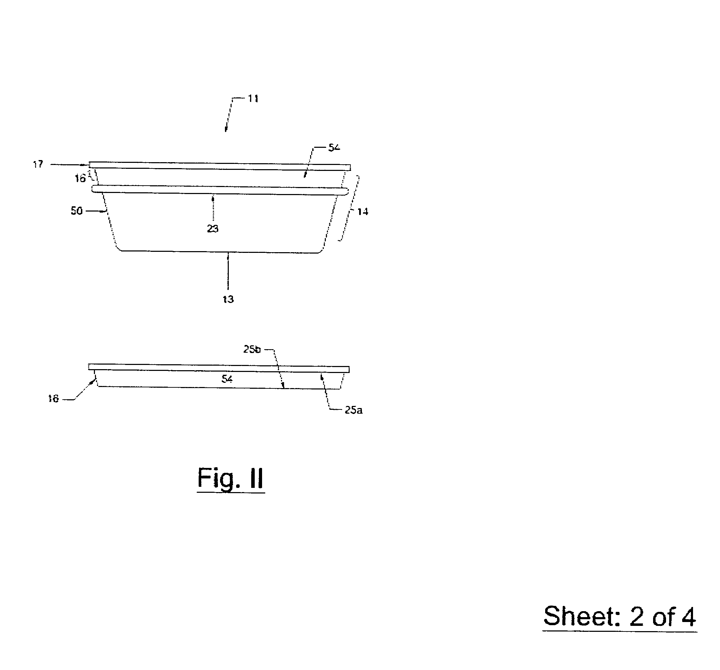

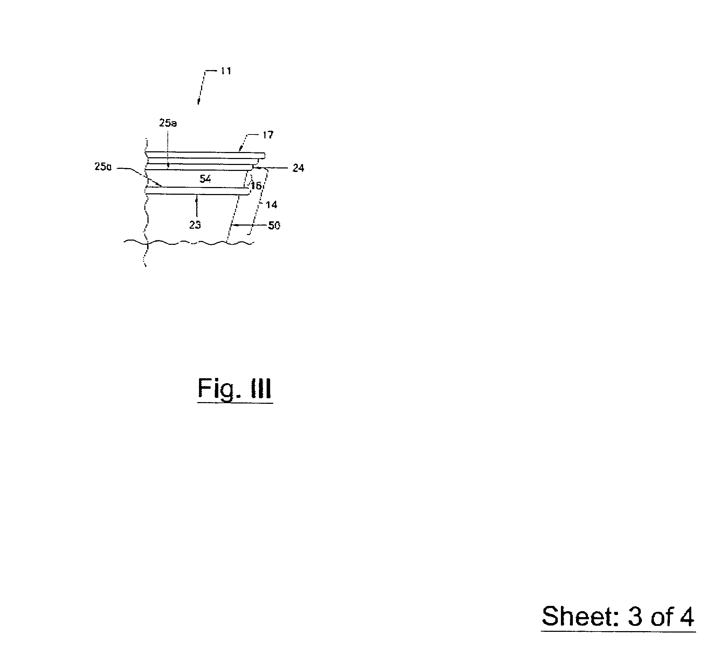

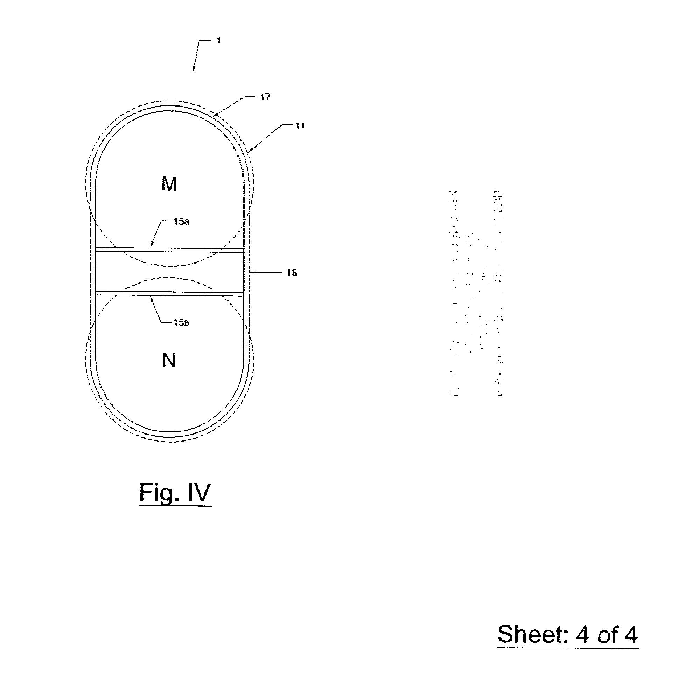

As seen in **Fig. 1****,** each feeding container **11** comprises of a bottom wall **13** adjoining a side wall **14** extending upwards and away from the bottom wall **13** and meeting the top end **44** of the container **11**. The bottom wall **13** and the side wall **14** and the top end **44** of the container,**11** together define the volume 12 of the container **11** which translates to the amount of food, water or such other liquid that the container **11** can hold. The feeding containers **11** of the present example are substantially circular such that the bottom wall is round and the sidewalls are substantially curvilinear in shape.

The sidewall **14** of the container **11** has two lateral edges- the first lateral edge **42** and the second lateral edge **43**. The first lateral edge **42** connects the sidewall **14** with the bottom wall **13** of the container **11** and the second lateral edge **43** joins the side wall **14** with the top **44** of the container **11**. The sidewall **14** moves upwards and away from the bottom wall **13** of the container **11.** The upper portion **16** of the sidewall **14** is angled outward as compared to the lower portion **50** of the sidewall **14** when measured with the bottom wall. In an alternate embodiment, both the upper portion **16** and the lower portion 50 of the side wall **14** can be at a same angle.

The top end **44** of the container **11** ends in an abutment **24** which extends circumferentially along the feeding container **11**. In the present embodiment, the abutment 24 forms a lip **17** extending horizontally and laterally to the top **44** of the sidewall **14**. In the present embodiment, the circumference of the lip **17** is equal to the circumference of the top **44** of the sidewall **14**. The shape of the abutment **24** is dependent on the shape of the feeding container **11**. In an alternate embodiment, abutment may or may not extend throughout the entire length of the top of the sidewall.

The upper portion **16** of the sidewall **14** is coated or lined with a liner **54** of an elastomeric material or such other materials having resilient properties. Each feeding container **11** has at least one such layer or liner 54 of such resilient material. The resilient materials may be selected from elastomeric materials such as rubber and plastic. The liner **54** is configured such that it fits over exterior of the upper portion **16** of the feeding container **11**. The shape and size of the liner **54** is corresponds to the shape and size of the upper portion **16** of the feeding container **11** such that it fits snugly over the said exterior portion. The liner **54** has two lateral ends - the upper lateral end **25a** and the lower lateral end 25b. As seen in Figs **II** & **III**, the upper lateral end **25a** coats laterally and horizontally the underside of the lip **24** whereas the lower lateral end **25b** adjoins the projection **23** which runs circumferentially over the sidewall 14 of the container **11**. Therefore the liner is supported between the abutted lip portion at one end and the projection at the other end. Therefore, the projection retains the liner on the upper portion **16** of the side wall **14** and prevents the liner **54** from down to the lower portion **50** of the side wall **14.** The said projection 23 is present on the exterior surface of the feeding container **11**. The projection can be obtained by various processes such as by stamping, molding or such other suitable techniques. It is to be noted that the liner **54** isolates the feeding containers **11** from the holding device **21** and prevents direct contact between the containers **11** and the holding device **21** thereof. Thus the liner prevents a direct metal-metal contact and muffles any generation of sounds such as rattling, clanking, banging, etc as the pet feeds on food, water or such other liquid provided thereof. Another advantage achieved by using a liner **54** is prevention of movement or displacement of the feeding containers **11** as the pet feeds in them. During the process of feeding, the pet may push or nudge the containers thereby moving or displacing the container with its mouth. Such movement is prevented with the presence of liner **54** and spillage and splattering of food, water or such other liquids is avoided. Furthermore, the liners **54** of the present invention being resilient in nature are pliable enough to be removed before the washing of the container **11** and can be put back into place before the next use of the feeding containers **11.**

The feeding containers **11** are placed in a holding device **21** as seen in Figs **I, III** & **IV**. In the present embodiment, the holding device **21** is wired stainless steel frame of 0.125-inch diameter in thickness. However, in an alternate embodiment, the frame **24** may be made of any other suitable metallic material and may be further coated to achieve desirable properties such as anti-rust, anti-corrosive, non-toxic surface which is smooth, polished and cannot be dented or scratched easily. Evidently seen in **Fig. I** & **III**, the frame of the holding device **21** comprises of a frame **24** surrounding the feeding containers **11** exteriorly and in a substantially elliptical shape. The position "exteriorly" means the exterior portion of the containers **11** which is facing away from each other when the feeding containers are placed into the grooves **M** and **N** as seen in **Fig. IV** as formed by the holding device **21. 24** is in turn supported by two substantially parallel stainless steel wires **15** which run like cross bars across the central portion of **24.** The cross-bars are further divided into the middle portion **15a** and the end portions **15b**. The cross bars **15** run between the two feeding containers **11** such that the middle portion **15a** supports the feeding containers **11** interiorly thereby ensuring that the feeding containers **11** are now completely supported. The position "interiorly" means that portion of the feeding containers **11** which is facing each other. The cross bars **15** are slightly bent at the end portions **15b** and connect the cross bars **15** to **24**. Therefore the frame **24** and the cross bars together form the grooves **M** and **N** which receive and hold the feeding containers **11**. The frame **24** of the holding device **21** is further supported on a pair of legs **20** on the front as well as the rear side of the feeding apparatus. The pair of legs **20** on each side of the feeding apparatus **1** is joined together by a central portion **18**. This central portion **18** also functions as a handle to hold the feeding apparatus **1** thus making it easy and convenient to carry around wherever desired. The end portion **56** (not seen) of the legs **20** are coated or lined by plugs **22** made of an elastomeric material such as plastics or rubber or such other material having resilient and resistance-to-move characteristics. That is to say that this elastomeric or such other material should generate enough frictional force against the floor on which the feeding apparatus **1** is placed such that the said apparatus cannot be moved or displaced when pushed or nudged by the pet animal during the process of feeding.

In an alternate embodiment, the feeding container of the present invention may be provided with an additional lower lip adjoining the second lateral edge of the side wall and horizontally extending from the bottom wall. The said lower lip contains a groove at the underside of the lower lip wherein a ring of a suitable elastomeric material or such other resilient material which generate enough frictional force against the floor or the ground on which such containers may be placed. The ring suitably described as an anti-slip ring can be retained the groove by an interference fit or such suitable means.

In yet another alternate embodiment, the feeding apparatus may a block of steel instead of a wired frame. As afore-mentioned, the design and the shape may depend on the aesthetic designing and utility of the feeding apparatus and the components of the present invention. The solid block may be provided with short legs to which the plugs maybe attached for resistance-to-move characteristics.

Any other aesthetic or otherwise minor variations such as additional handles, embossing, printing, and painting of the said feeding apparatus or its components may be done depending for customizing the device according to the requirements and desires of the pet or its owner.

The present invention also provides for a method for cleaning the pet feeding apparatus **1,** feeding containers **11** and holding device **21** thereof. The said method includes lifting and removing the used/soiled feeding containers **11** from the grooves **M** and **N**. The liner **54** present on the upper portion **16** of the side wall **14** has to be removed. The used/soiled feeding containers **11** which are now without the liner. **54** can be cleaned in a dishwasher or such other conventional means for cleaning and can be disinfected thereafter if required. The holding device **21** and the liner **54** can be cleaned separately but not in a dishwasher due to the nature of the liner and plugs **22**. After the feeding containers **11** have been cleaned, disinfected and dried, the liner can be placed back on the upper portion **16**. Because of its resilient and pliant nature, the liner **54** can be removed and placed back without any trouble. The lined containers are then placed back into the grooves **M** and **N** for next use.

The feeding apparatus **1** of the present invention also provides for a trouble-free and a comfortable experience for feeding pets.

It is to be noted that the invention is explained above with the help of an exemplary embodiment which is presented for the purpose of illustration and description in order to explain the various principles of the invention and their practical application. This is not intended to exhaust or limit the invention to a precise form that is disclosed and obviously many modifications and variations are possible in the light of the above teachings.

## Claims

1. A pet feeding apparatus comprising of at least two pet feeding containers and a holding device wherein:
- the pet feeding containers removably positioned within the grooves of the holding device and comprising a bottom wall adjoining a side wall which extends upwards and away from the said bottom wall and meets the top end of the said container and which bottom wall, sidewall and the top end of the container define the volume of food, water or such other liquid being held by the container.
- the removable character of the feeding containers rendering the containers easy to clean and disinfect.
- the holding device comprising of a frame for receiving and holding the pet feeding containers and which frame is supported on legs connected to the frame thereof.
- the pet feeding container exteriorly coated or lined by a liner of an elastomeric material or such other resilient material preventing displacement or movement of the feeding containers when the pet is eating or drinking.

2. The pet feeding container as claimed in claim 1 wherein the side wall further comprises of first lateral edge and second lateral edge in which the first lateral edge connects the side wall with the bottom wall of the container and the second lateral edge connects the side wall to the top end of the container.

3. The pet feeding container as claimed in claims 1 & 2 wherein the top end of the container ends in an abutment in form of a lip extending circumferentially along the feeding container.

4. The pet feeding container as claimed in any of the preceding claims wherein the container further comprises a projection on its exterior surface running circumferentially over the side wall of the container.

5. The pet feeding container as claimed in any of the preceding claims, wherein the liner is positioned on the upper portion of the side wall and comprises of upper lateral end that coats laterally and horizontally on the underside of the lip and the lower lateral end adjoining the said projection.

6. The pet feeding container as claimed in any of the preceding claims, wherein the liner of the container is supported between the abutted lip portion and the projection of the side wall.

7. The pet feeding container as claimed in any of the preceding claims, wherein the projection also retains the liner on the upper portion of the side wall of the container and prevents the liner from sliding down to the lower portion of the said side wall.

8. The pet feeding container as claimed in any of the preceding claims, wherein the liner is made of a material having elastomeric and resilient properties and selected from materials including rubber and plastic.

9. The pet feeding container and the holding device as claimed in any of the preceding claims are metallic in nature and may be optionally coated achieve desirable properties such as anti-rust, anti-corrosive, non-toxic surface which is smooth, polished, dent-free and scratch-free.

10. The holding device as claimed in claim 1, wherein a part of the frame surrounds the feeding containers exteriorly and is supported by two cross bars running substantially parallel to each other between the feeding containers thereof.

11. The cross bars as claimed in claim 10, comprising of middle portion which supports the feeding containers interiorly and end portions which adjoin the frame.

12. The holding device as claimed in any of the preceding claims, wherein the frame and the cross bars together form grooves for receiving and holding the feeding containers.

13. The holding device as claimed in any of the preceding claims, wherein the legs are further joined by a central portion, said central portion also functions as a handle for holding and carrying the said pet feeding apparatus.

14. The holding device as claimed in any of the preceding claims, wherein the end portion of the legs are coated or lined with plugs made of elastomeric material or any other suitable material which generates frictional force against the floor or ground on which the pet feeding apparatus is placed thereby preventing movement or displacement of the apparatus thereof.

15. The pet feeding apparatus comprising of at least two feeding containers substantially similar in shape but not necessarily in size.

16. The pet feeding container as claimed in any of the preceding claims, wherein the liner isolates the metallic container from the metallic holding device thereby muffling any undesired noise generated during feeding of pets.
